# EUROPÄISCHE PATENTSCHRIFT

(11) **EP 2 225 917 B1**
(45) Veröffentlichungstag und Bekanntmachung des Hinweises auf die Patenterteilung: **15.01.2014**
(21) Anmeldenummer: 07858095.8
(22) Anmeldetag: 21.12.2007
(51) Int. Cl.: H05B 37/02, H05B 39/08

(54) **VORRICHTUNG UND VERFAHREN ZUR STEUERUNG VON ELEKTRISCHEN VERBRAUCHERN**
DEVICE AND METHOD FOR CONTROLLING ELECTRIC CONSUMERS
DISPOSITIF ET PROCÉDÉ POUR LA COMMANDE D'APPAREILS ÉLECTRIQUES

(43) Veröffentlichungstag der Anmeldung: 08.09.2010
(73) Patentinhaber: OSRAM GmbH, 80807 München (DE)
(72) Erfinder: ROSSMANITH, Thomas, 80636 München (DE); SCHMIDL, Maximilian, Pullach 82049 (DE)
(86) Internationale Anmeldenummer: PCT/EP2007/064484
(87) Internationale Veröffentlichungsnummer: WO 2009/083025

(56) Entgegenhaltungen:
- WO-A-2006/074630
- US-A- 5 237 207
- US-A1- 2002 109 465
- US-A1- 2005 083 626

## Beschreibung

### Technisches Gebiet

Die Erfindung betrifft eine Vorrichtung zur Steuerung mindestens eines elektrischen Verbrauchers, mit mindestens einem Taster, und einer Kommunikationsschnittstelle zur Kommunikation mit den Verbrauchern, wobei die Verbraucher durch den mindestens einen Taster über die Kommunikationsschnittstelle Ein- und Ausgeschaltet werden.

### Stand der Technik

Die Erfindung geht aus von einer Vorrichtung zur Steuerung mindestens eines elektrischen Verbrauchers nach der Gattung des Hauptanspruchs.

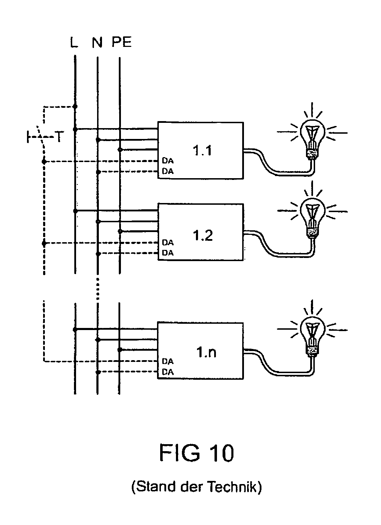

Fig. 10 zeigt eine herkömmliche Installation von Verbrauchern, in diesem Fall elektronischen Betriebsgeräten für Leuchtmittel nach dem Stand der Technik. Die elektronischen Betriebsgeräte sind an eine Energieversorgung (N, PE) angeschlossen, und werden über eine Kommunikationsschnittstelle (DA) Ein- und Ausgeschaltet. Ein gängiges Protokoll in diesem Bereich ist das DALI-Protokoll (Digital Addressable Light Interface). Eine bevorzugte Funktionalität der Kommunikationsschnittstelle ist bei kleineren Anlagen die sogenannte Touch-Dim Funktion, die auch von vielen Geräten mit einer DALI Schnittstelle beherrscht wird. Hierzu wird ein Taster verwendet. Wird der Taster nur kurz gedrückt, schaltet das Betriebsgerät das oder die Leuchtmittel ein oder aus. Wird bei eingeschalteten Leuchtmitteln der Taster länger gedrückt, so werden die Leuchtmittel auf- oder abwärts gedimmt. Sowohl bei kurzem, als auch bei längerem Drücken des Tasters wird die jeweils zur vorigen Funktion komplementäre Funktion ausgeführt. Wenn die Leuchtmittel in Betrieb sind, werden sie durch einen kurzen Druck auf den Taster ausgeschaltet. Sind sie ausgeschaltet, so werden sie durch einen kurzen Druck auf den Taster eingeschaltet und so fort. Sind die Leuchtmittel eingeschaltet und wird der Taster länger gedrückt, so werden die Leuchtmittel heruntergedimmt. Beim nächsten längerem Tastendruck werden sie wieder heraufgedimmt. Die aktuelle Dimmstellung kann durch einen ,Doppelklick' d.h. zwei kurz aufeinanderfolgende Tastendrücke des Tasters im Gerät abgespeichert werden.

Das Ein- und Ausschalten kann wie auch andere DALI/Touch-Dim Kommandos zu einem beliebigen Zeitpunkt erfolgen, was eine ständige Kommunikationsbereitschaft der elektronischen Betriebsgeräte erforderlich macht. Die elektronischen Betriebsgeräte müssen deshalb ständig mit Energie versorgt werden. Dies gilt insbesondere auch dann, wenn das Leuchtmittel eines elektronischen Betriebsgerätes durch ein DALI/Touch-Dim Kommando ausgeschaltet wurde und dieses sich im Standby-Modus befindet.

Aus der US 5 237 207 ist ein Kontrollsystem bekannt, welches Verbraucher wie Glühlampen dimmen sowie Einschalten und Ausschalten kann. Das Kontrollsystem ist als busgesteurtes System ausgebildet, bei dem die Verbraucher immer an die Energieversorgung angeschlossen sind.

Aus der WO 2006/074630 A1 ist eine Vorrichtung zum gesteuerten Schalten von Verbrauchern wie Glühlampen bekannt, bei dem die Verbraucher über ein Bussystem, z.B. einen DALI-Bus, eingeschaltet und ausgeschaltet werden können.

Aus der US 2005/0083626 A1 ist eine elektrische Vorrichtung bekannt, welche über einen Schalter ein Einschaltsignal und ein Ausschaltsignal an einen Mikrocontroller übermittelt, der eine Last einschaltet beziehungsweise ausschaltet.

Aus der US 2002 / 0109465 A1 ist eine Schaltungsanordnung zum Betreiben einer Last bekannt, die mehrere Eingänge zum Schalten der Last aufweist.

Die vorstehend beschriebene permanente Energieversorgung von elektronischen Betriebsgeräten führt insbesondere bei großen Beleuchtungsanlagen zu einem hohen, unerwünschten Energieverbrauch im Standby-Modus.

Größere Beleuchtungsanlagen werden zur Reduzierung des Energieverbrauches im Standby-Modus manuell oder über Zeitschaltuhren dann vom Stromnetz getrennt, wenn sichergestellt ist, dass diese nicht benötigt werden (z.B. nachts). Während üblicher Nutzungszeiten der Anlage sind jedoch alle Anlagenteile mit Energie aus dem Stromnetz versorgt. Nicht genutzte Anlagenteile befinden sich dann im Standby-Betrieb und verursachen dadurch einen unerwünschten zusätzlichen Energieverbrauch.

Ein manuelles oder über Zeitschaltuhren gesteuertes Trennen der Beleuchtungsanlage vom Stromnetz, wie es bislang praktiziert wird, um Energie einzusparen, hat ferner den Nachteil, dass die Beleuchtungsanlage, falls diese in einem Ausnahmefall während dieser Zeit benötigt wird, nur durch zusätzliche Arbeitsschritte aktivierbar ist.

### Aufgabe

Es ist Aufgabe der Erfindung, eine Vorrichtung anzugeben, die die Verbraucher so steuert, dass die Standby-Verluste reduziert werden.

Die Lösung der Aufgabe erfolgt erfindungsgemäß mit den Merkmalen des Anspruchs 1.

Es ist ebenfalls Aufgabe der Erfindung, ein Verfahren anzugeben, mittels dem ein oder mehrere Verbraucher so gesteuert werden, dass die Standby-Verluste der Verbraucher reduziert werden.

Die Lösung dieser Aufgabe erfolgt erfindungsgemäß mit den Merkmalen des Verfahrensanspruchs 9.

### Darstellung der Erfindung

Weitere vorteilhafte Weiterbildungen und Ausgestaltungen der erfindungsgemäßen Vorrichtung zur Steuerung von elektrischen Verbrauchern ergeben sich aus den abhängigen Ansprüchen und aus der folgenden Beschreibung.

Erfindungsgemäß wird der Taster, der die Verbraucher steuert, um eine Kontrolllogik und einen ersten gesteuerten Schalter erweitert. Dieser erste gesteuerte Schalter ist zwischen die Energieversorgung und die Verbraucher geschaltet. Er schaltet vorzugsweise die Phase der Energieversorgung. Ein zweiter gesteuerter Schalter dient dazu, die vom Taster generierten Pulsfolgen über einen Ausgang der Vorrichtung an die Verbraucher weiterzuleiten. Die Kontrolllogik kennt die Schaltzustände der Verbraucher und erkennt bestimmte Schaltaktionen. Sind die Verbraucher eingeschaltet, und wird der Taster kurz gedrückt, so werden die Verbraucher über die Kommunikationsschnittstelle ausgeschaltet, und der gesteuerte Schalter kurz danach geöffnet, um die Energieversorgung von den Verbrauchern und von der Kontrolllogik des gesteuerten Schalters zu trennen. Wird der Taster erneut gedrückt, so wird der gesteuerte Schalter geschlossen und die Energieversorgung an die Kontrolllogik und an die Verbraucher angelegt. Kurz danach wird das vom Taster generierte Einschaltsignal durch den zweiten gesteuerten Schalter weitergeleitet, um die Verbraucher einzuschalten. Alle sonstigen Aktionen, die sich auf die Touch-Dim Funktionalität beziehen werden durch den zweiten gesteuerten Schalter direkt vom Taster an die Verbraucher weitergegeben.

### Kurze Beschreibung der Zeichnung(en)

Die Erfindung wird nachstehend anhand von Ausführungsbeispielen näher erläutert. Es zeigen:
- Fig. 1: Eine Installation mit der erfindungsgemäßen Vorrichtung in einer ersten Ausführungsform zur Energieversorgung von Verbrauchern.
- Fig. 2: Einige relevante Signale der erfindungsgemäßen Vorrichtung.
- Fig. 3: Eine Installation mit der erfindungsgemäßen Vorrichtung in einer zweiten Ausführungsform zur Energieversorgung von Verbrauchern.
- Fig. 4: Die Anschlussbelegung der erfindungsgemäßen Vorrichtung in der zweiten Ausführungsform.
- Fig. 5: Eine Schaltungsanordnung des Leistungsteils der erfindungsgemäßen Vorrichtung.
- Fig. 6: Eine schematische Darstellung einer digitalen Kontrolllogik mit Mikrocontroller der erfindungsgemäßen Vorrichtung.
- Fig. 7a: Eine Darstellung der Verschaltung einer analogen Kontrolllogik der erfindungsgemäßen Vorrichtung.
- Fig. 7b: Eine Zustandstabelle der analogen Kontrolllogik der erfindungsgemäßen Vorrichtung.
- Fig. 8: Eine Darstellung der Ansteuerung der gesteuerten Schalter der erfindungsgemäßen Vorrichtung.
- Fig. 9: Eine Schaltungsanordnung des Leistungsteils in einer weiteren Variante der erfindungsgemäßen Vorrichtung.
- Fig. 10: Eine Installation zur Steuerung von Verbrauchern nach dem Stand der Technik.
- Fig. 11: Ein Flussdiagramm zur Veranschaulichung der internen Abläufe bei der digitalen Kontrolllogik nach Fig. 6.
- Fig. 12: Ein Ablaufdiagramm mit der beispielhaften Darstellung mehrerer Aktionen und den zugehörigen Signalen.

### Bevorzugte Ausführung der Erfindung

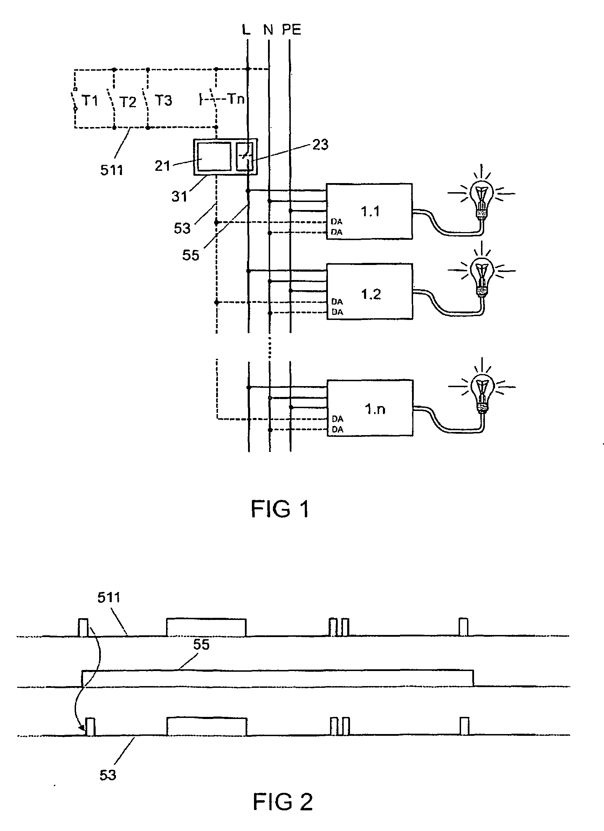

Eine erste Ausführungsform 31 der erfindungsgemäßen Vorrichtung ist in Fig. 1 zu sehen. Die Verbraucher 1.1, 1.2, ... ,1.n sind alle an ein Energieversorgungsnetz angeschlossen, dass einen durchgeschleiften Nulleiter N sowie eine durchgeschleifte Erde PE aufweist. Die Phase 55 wird durch den ersten gesteuerten Schalter 23 geschaltet. Der erste gesteuerte Schalter wird durch eine Kontrolllogik 21 angesteuert. Die erfindungsgemäße Vorrichtung hat einen Eingang für einen oder mehrere Taster T₁-Tₙ, die jeweils parallel geschaltet sind. Der oder die Taster T₁-Tₙ generieren ein Eingangssignal 511. Über den oder die Taster T₁-Tₙ werden die Verbraucher 1.1, 1.2, ... , 1.n gesteuert, vorzugsweise über das eingangs erwähnte Touch-Dim-Verfahren.

In Fig. 2 sind einige Signale die die erfindungsgemäße Vorrichtung betreffen, dargestellt. Signal 511 ist das von den Tastern T₁-Tₙ generierte Eingangssignal. Die Kontrolllogik erkennt das einmalige Drücken eines Tasters und schaltet den ersten gesteuerten Schalter 23 ein, um die Energieversorgung, durch das Signal 55 dargestellt, an die Verbraucher anzulegen. Kurz nach dem Einschalten der Energieversorgung (ca. 200 ms) wird das Einschaltsignal am Steuerausgang reproduziert (Signal 53). Solange die Verbraucher eingeschaltet sind, werden alle Aktionen, die von einem der Taster T₁-Tₙ generiert werden durchgeschleift beziehungsweise verzögert wiedergegeben. Lediglich ein einzelner Tastendruck wird von der Kontrolllogik erkannt, und daraufhin die Verbraucher ausgeschaltet und sodann die Energieversorgung durch Öffnen des ersten gesteuerten Schalters 23 getrennt.

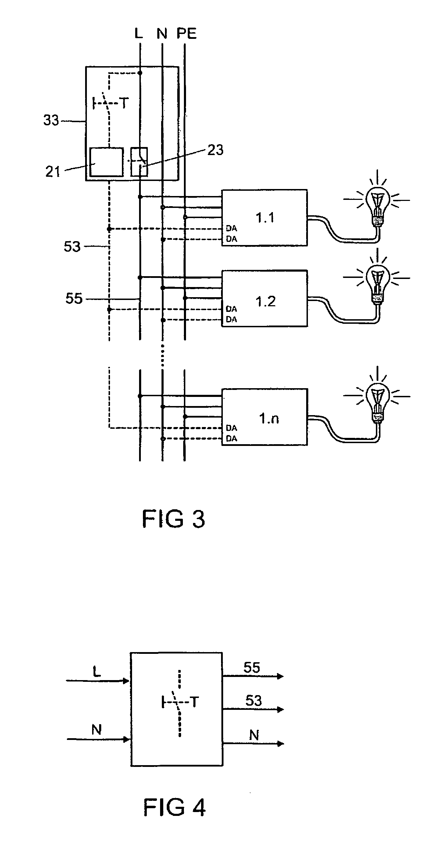

In einer zweiten Ausführungsform nach Fig. 3 ist die erfindungsgemäße Vorrichtung als integrierte Lösung 33 zur Installation z.B. in einer Unterputzdose vorgesehen. Ein Taster T ist in die Vorrichtung integriert, die die in der Fig. 4 dargestellte Anschlussbelegung aufweist. Die Vorrichtung beinhaltet eine Netzphase L und einen Nulleiter N als Eingänge. Alternativ kann ein Eingang zum Anschluss weiterer Taster vorgesehen sein. Der Nulleiter N ist durchgeschleift und bildet zusammen mit der geschalteten Phase 55 den Schaltausgang. Das Signal 53 bildet zusammen mit dem Nulleiter N den Ausgang der Kommunikationsschnittstelle zur Steuerung der Verbraucher.

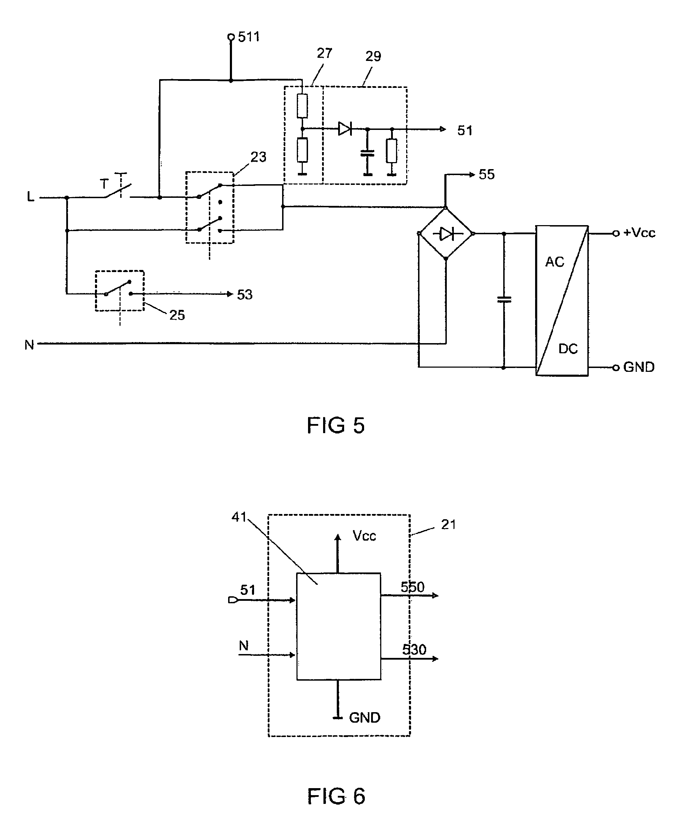

In Fig. 5 ist die Schaltungsanordnung des Leistungsteils der erfindungsgemäßen Vorrichtung dargestellt. An die Phase L ist ein Taster T angeschlossen, der das Signal 511 bildet. Dieses Signal wird über einen Spannungsteiler 27 und eine Entstörstufe 29 in ein Kleinspannungssignal 51 zur Weiterverarbeitung in der Kontrolllogik 21 umgewandelt. Hinter dem Taster T ist der erste gesteuerte Schalter 23 angeordnet, der hier als Relais ausgeführt ist. Am Ausgang des Schalters 23 steht das Signal 55 als Schaltsignal an. Über einen Brückengleichrichter und einen Abwärtswandler wird aus dem Signal 55 ein Niederspannungssignal zur Versorgung der Kontrolllogik generiert. Durch einen zweiten von der Kontrolllogik gesteuerten Schalter 25 wird das Steuersignal 53 für die Kommunikationsschnittstelle generiert.

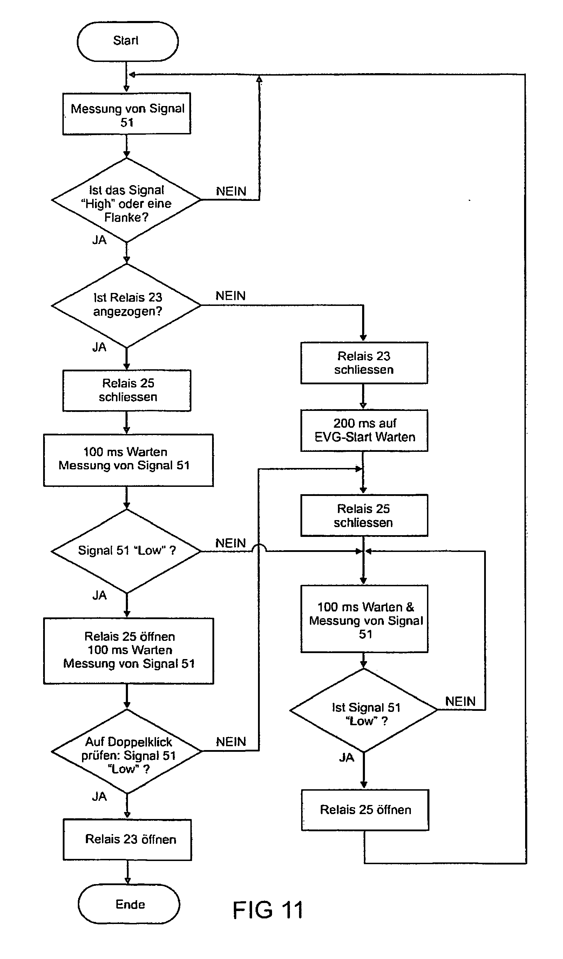

Fig. 6 zeigt eine schematische Darstellung einer digitalen Kontrolllogik 21 mit einem Mikrocontroller 41 der erfindungsgemäßen Vorrichtung. Der Mikrocontroller verarbeitet das Eingangssignal 51, und stellt abhängig von dem Eingangssignal 51 die beiden Ausgangssignale 550 und 530 zur Ansteuerung des ersten und zweiten gesteuerten Schalters bereit. Die Logik selbst ist in der entsprechenden Software realisiert. Einen Überblick über die Grundfunktionalität der Software zeigt Fig. 11. Es werden im wesentlichen die Zustände der beiden Relais 23 und 25 abgefragt und zwischen einem einfachen Druck des Tasters T oder einem ,Doppelklick' unterschieden. Bei einem einfachen Druck des Tasters wird dieses Signal an den zweiten gesteuerten Schalter 25 weitergegeben und als Signal 53 ausgegeben, sofern die Verbraucher 1.1, 1.2, ... ,1.n eingeschaltet sind. Danach werden die Verbraucher 1.1, 1.2, ... ,1.n mittels dem ersten gesteuerten Schalter 23 ausgeschaltet. Sind die Verbraucher ausgeschaltet so werden sie erst mittels dem ersten gesteuerten Schalter 23 eingeschaltet, und das Signal mit dem Einschaltpuls dann danach als Signal 53 ausgegeben.

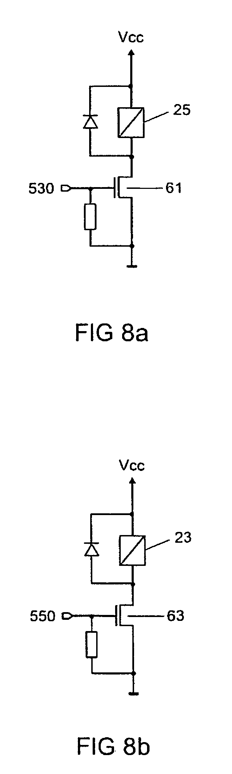

Mit ,Relais 23/25 öffnen/schließen' ist hier immer die Ausgabe eines entsprechenden Signals 550/530 am Ausgang der digitalen Schaltung gemeint. Die Ansteuerung des ersten und zweiten gesteuerten Schalters wird über Transistoren 63 beziehungsweise 61 realisiert und ist in den Fig. 8a und 8b dargestellt. Die Steuersignale 530 und 550 werden in die Transistoren 61 beziehungsweise 63 eingegeben, der dann die gesteuerten Schalter 25 beziehungsweise 23 entsprechend schaltet.

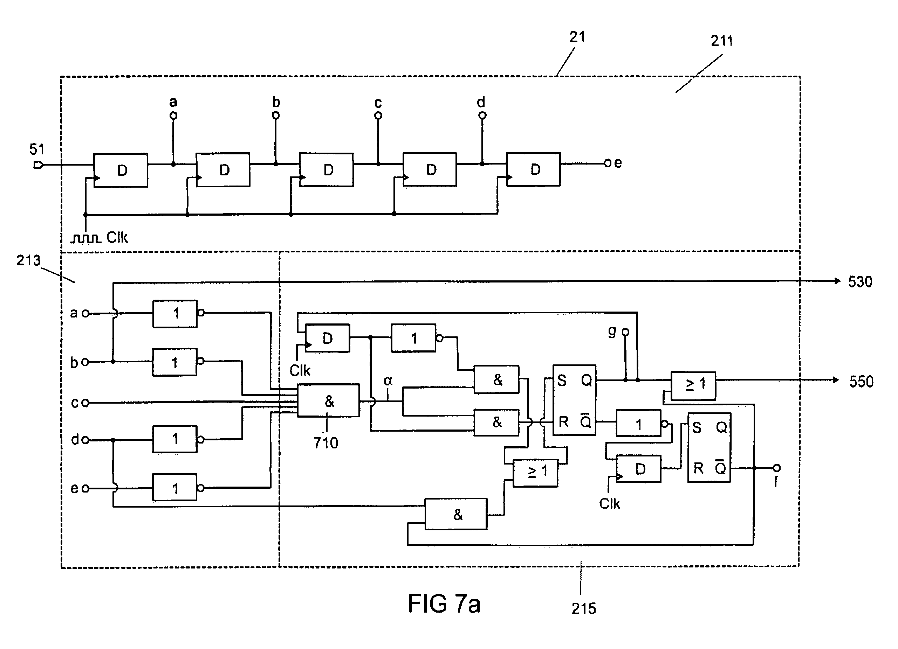

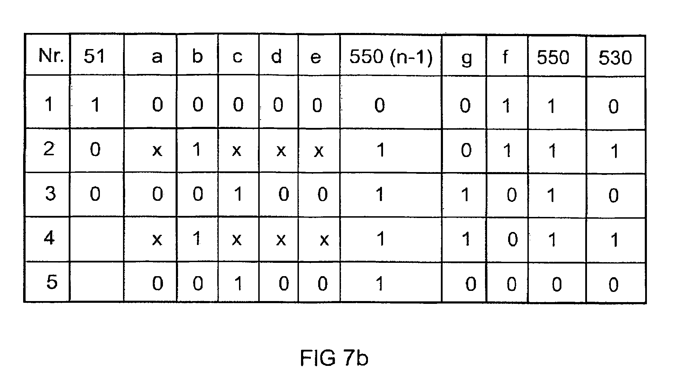

Fig. 7a zeigt eine schematische Darstellung einer analogen Kontrolllogik 21, die aus verschiedenen Logikgattern und Flip-Flops aufgebaut ist. Die zugehörige Zustandstabelle der Logik ist in Fig. 7b angegeben. Diese Tabelle gilt prinzipiell auch für eine digitale Kontrolllogik nach Fig. 6. Die Vorgehensweise der analogen Kontrolllogik ist folgende: Das Eingangssignal 51 des Tasters wird in einer Impulsformeinheit 211 zu einer zeitdiskreten Impulsfolge umgeformt, dann in einer Detektionseinheit 213 auf einen einfachen Tastendruck hin abgetastet und sodann aus dieser Information in einer Logikschalteinheit 215 die beiden Steuersignale 530 und 550 generiert.

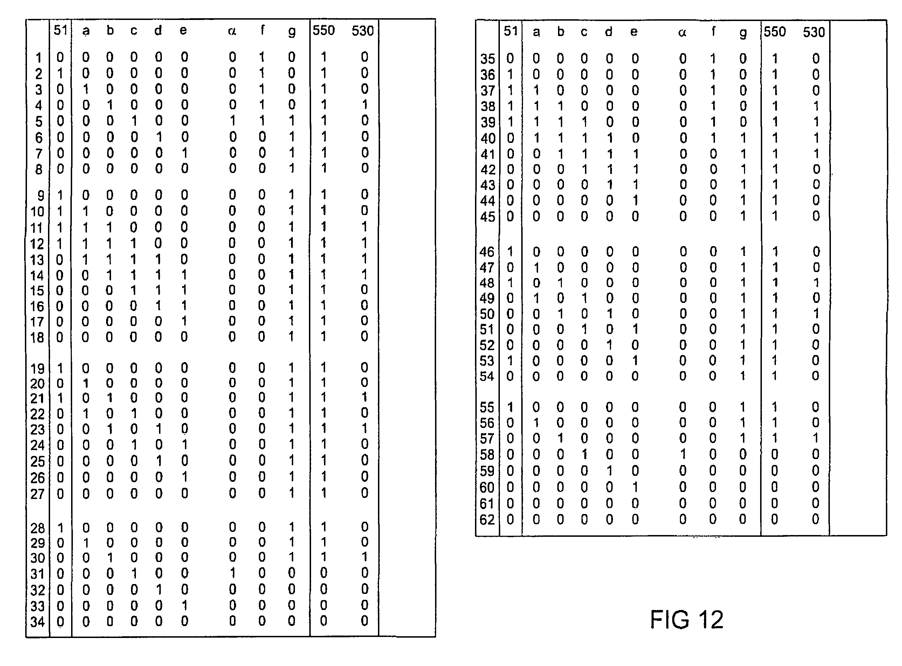

Ein beispielhafter Ablauf einiger relevanter Signale ist in Fig. 12 angegeben. Es sind das Eingangssignal 51, das durch den Taster T erzeugt wird, sowie die zeitdiskreten Signale a, b, c, d und e angegeben. Als Zwischensignal ist das Ausgangssignal α des Und-Gatters 710 angegeben, sowie die Signale f und g. Schließlich sind die Signale 530 und 550 angegeben.

Die Fig. 12 stellt einen zeitdiskreten Ablauf von 62 Zyklen der analogen Kontrolllogik mit verschiedenen beispielhaften Tastendrücken dar. Die Zyklennummern sind in der ersten Spalte angegeben. Die Funktion ,Einschalten', also ein einzelner Tastendruck ist in Zyklus 1-8 angegeben. Zyklus 9-18 zeigt beispielhaft die Funktion ,Dimmen', also einen längeren Tastendruck mittels dem die Verbraucher 1.1, 1.2, ... , 1.n gedimmt werden. Die Funktion 'Doppelklick', um den Dimmlevel zu speichern kann in den Zyklen 19-27 verfolgt werden. Das darauffolgende Ausschalten der Verbraucher 1.1, 1.2, ... ,1.n ist in den Zyklen 28-34 angegeben. Die Touch-Dim Funktionalität ,Einschalten mit sofortigem Dimmen', also ein langer Tastendruck bei ausgeschalteten Verbrauchern 1.1, 1.2, ... ,1.n kann in den Zyklen 35-45 verfolgt werden. Zyklen 46-54 beschreiben wiederum das Speichern des Dimmlevels, also einen Doppelten Druck des Tasters. Zyklen 55-62 schließlich schalten die Verbraucher 1.1, 1.2, ... ,1.n wieder aus.

In dieser Tabelle kann verfolgt werden wie ein ,Doppelklick' abgefangen und im Signal 53 weitergegeben wird während ein einfacher Tastendruck zu Ein- beziehungsweise Ausschalten der Verbraucher 1.1, 1.2, ... ,1.n führt, wobei das hardwareseitige Ein- beziehungsweise Ausschalten der Verbraucher entsprechend vorher beziehungsweise nachher geschieht.

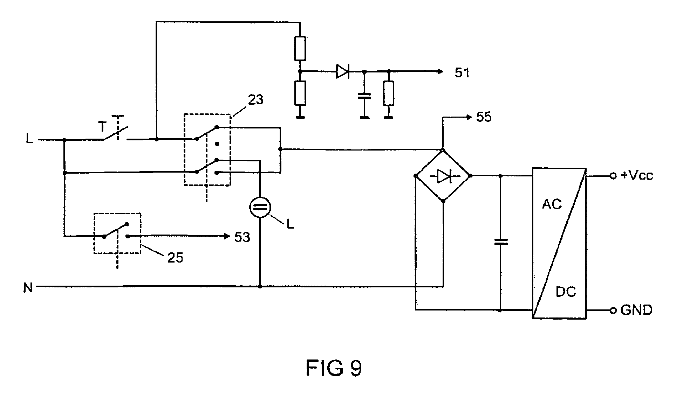

Fig. 9 zeigt eine Variante der zweiten Ausführungsform mit dem zusätzlichen Merkmal eines beleuchteten Tasters, der lediglich leuchtet, wenn alle Verbraucher abgeschaltet sind. Dazu wird ein Schaltkontakt des ersten gesteuerten Schalters benützt, der die Tasterbeleuchtung L auf die Energieversorgung schaltet, wenn die Verbraucher von der Energieversorgung getrennt sind.

Fig. 10 zeigt die eingangs beschriebene Installation zur Steuerung von Verbrauchern nach dem Stand der Technik.

Mit dem erfindungsgemäßen Verfahren und der erfindungsgemäßen Vorrichtung kann viel Energie beim Betrieb von z.B. kleinen bis mittelgroßen Beleuchtungsanlagen eingespart werden, indem bei abgeschalteten Leuchtmitteln die Betriebsgeräte und die erfindungsgemäße Vorrichtung selbst vom Energieversorgungsnetz getrennt werden. Erst bei Bedarf werden die Betriebsgeräte und die erfindungsgemäße Vorrichtung wieder an das Energieversorgungsnetz angeschlossen und stehen dann mit ihrer vollen Funktionalität zur Verfügung.

### Bezugszeichenliste

- 1.1 .. 1.n: Verbraucher 1 .. n
- 21: Kontrolllogik
- 211: Impulsformeinheit
- 213: Detektionseinheit
- 215: Logikschalteinheit
- 23: erster gesteuerter Schalter
- 25: zweiter gesteuerter Schalter
- 27: Spannungsteiler
- 29: Entstörschaltung
- 31: Erfindungsgemäße Vorrichtung zur Steuerung der Energieversorgung von elektrischen Verbrauchern
- 41: Mikrocontroller
- 51: Kleinspannungseingangsschaltsignal
- 511: Eingangsschaltsignal
- 53: Steuersignal für die Kommunikationsschnittstelle
- 55: Schaltsignal für die Energieversorgung
- 530: Steuersignal für den zweiten gesteuerten Schalter
- 550: Steuersignal für den ersten gesteuerten Schalter
- 61: Ansteuertransistor für den zweiten gesteuerten Schalter.
- 63: Ansteuertransistor für den ersten gesteuerten Schalter.
- 710: UND-Gatter
- T, T .. Tₙ: Taster zur Ansteuerung der Verbraucher.
- L: Phase der Energieversorgung.
- N: Nulleiter der Energieversorgung.
- PE: Erde der Energieversorgung.
- V..: Niederspannungsversorgung der Kontrolllogik.
- GND: Masse der Kontrolllogik.
- Clk: Taktsignal

## Patentansprüche

1. Vorrichtung (31) zur Steuerung mindestens eines elektrischen Verbrauchers (1.1 .. 1.n), mit mindestens einem Taster (T₁-Tₙ), einer Kommunikationsschnittstelle zur Kommunikation mit den Verbrauchern, einer Kontrolllogik (21) und mindestens einem ersten gesteuerten Schalter (23), wobei
- der mindestens eine erste gesteuerte Schalter (23) und die Kommunikationsschnittstelle durch die Kontrolllogik (21) angesteuert werden,
- die Kontrolllogik einen Eingang für ein Eingangssignal (511) aufweist,
- der mindestens eine Taster (T₁-Tₙ) das Eingangssignal (511) für die Kontrolllogik (21) generiert, und
- die Verbraucher (1.1 .. 1.n) durch das von dem mindestens einen Taster generierte Eingangssignal (511) über die Kommunikationsschnittstelle Ein- und Ausgeschaltet werden, **dadurch gekennzeichnet, dass**
- der mindestens eine erste gesteuerte Schalter (23) zwischen die Verbraucher (1.1 .. 1.n) und eine Energieversorgung geschaltet ist, und
- die Verbraucher durch das generierte Eingangssignal des mindestens einen Tasters (T₁-Tₙ) über die Kontrolllogik (21) durch den mindestens einen gesteuerten Schalter (23) mit Spannung versorgt werden, wobei
- der mindestens eine erste gesteuerte Schalter (23) beim Ausschalten der Verbraucher die Energieversorgung von den Verbrauchern (1.1 .. 1.n) trennt, sobald alle Verbraucher (1.1 .. 1.n) über die Kommunikationsschnittstelle abgeschaltet sind, und
- der mindestens eine erste gesteuerte Schalter (23) beim Einschalten der Verbraucher die Energieversorgung an die Verbraucher (1.1 .. 1.n) anlegt, und die Kontrolllogik (21) kurz danach das Eingangssignal (511) als Steuersignal an der Kommunikationsschnittstelle ausgibt.

2. Vorrichtung nach Anspruch 1, **dadurch gekennzeichnet, dass** die elektrischen Verbraucher (1.1 .. 1.n) elektronische Betriebsgeräte für Lichtquellen sind.

3. Vorrichtung nach Anspruch 1 oder 2, **dadurch gekennzeichnet, dass** die Kommunikationsschnittstelle eine Touch-Dim Funktionalität aufweist.

4. Vorrichtung nach Anspruch 3, **dadurch gekennzeichnet, dass** die Kommunikationsschnittstelle dem DALI Standard mit einer Touch-Dim Funktionalität entspricht.

5. Vorrichtung nach einem der vorhergehenden Ansprüche, **dadurch gekennzeichnet, dass** die Kontrolllogik (21) eine Analogschaltung aufweist.

6. Vorrichtung nach einem der vorhergehenden Ansprüche 1 bis 4, **dadurch gekennzeichnet, dass** die Kontrolllogik (21) eine Digitalschaltung mit einem Mikrocontroller (41) aufweist.

7. Vorrichtung nach einem der vorhergehenden Ansprüche, **dadurch gekennzeichnet, dass** die Vorrichtung einen zweiten gesteuerten Schalter (25) aufweist, der von der Kontrolllogik (21) angesteuert wird.

8. Vorrichtung nach Anspruch 7, **dadurch gekennzeichnet, dass** der zweite gesteuerte Schalter (25) das vom Taster (T₁-Tₙ) generierte Signal teilweise verzögert wiedergibt.

9. Verfahren zur Steuerung mindestens eines elektrischen Verbrauchers (1.1 .. 1.n), mit mindestens einem Taster (T₁-Tₙ) zur Generierung eines Eingangssignals (511), mindestens einem ersten gesteuertem Schalter (23), einer Kommunikationsschnittstelle zur Kommunikation mit den Verbrauchern (1.1 .. 1.n), sowie einer Kontrolllogik (21), die den mindestens einen ersten gesteuerten Schalter (23) und die Kommunikationsschnittstelle ansteuert, wobei
- die Kontrolllogik einen Eingang für das von dem mindestens einen Taster T₁-Tₙ generierte Eingangssignal (511) aufweist, und
- die Verbraucher (1.1 .. 1.n) durch das generierte Eingangssignal (511) des mindestens einen Tasters (T₁-Tₙ) über die Kommunikationsschnittstelle Ein- und Ausgeschaltet werden können, **dadurch gekennzeichnet dass**
- der mindestens eine erste gesteuerte Schalter (23) zwischen die Verbraucher (1.1 .. 1.n) und eine Energieversorgung geschaltet ist,
- die Verbraucher durch das generierte Eingangssignal des mindestens einen Tasters (T₁-Tₙ) über die Kontrolllogik durch den mindestens einen ersten gesteuerten Schalter (23) mit Spannung versorgt werden können,
- die Energieversorgung durch den mindestens einen ersten gesteuerten Schalter (23) von den Verbrauchern (1.1 .. 1.n) getrennt wird, sobald alle Verbraucher (1.1 .. 1.n) über die Kommunikationsschnittstelle ausgeschaltet werden,
- die Energieversorgung durch den mindestens einen ersten gesteuerten Schalter (23) beim Einschalten an die Verbraucher (1.1 .. 1.n) angelegt wird, und das Eingangssignal durch die Kontrolllogik (21) kurz danach als Steuersignal an der Kommunikationsschnittstelle ausgegeben wird.

10. Verfahren nach Anspruch 9, **dadurch gekennzeichnet, dass** die elektrischen Verbraucher durch den mindestens einen Taster (T₁-Tₙ) über die Kommunikationsschnittstelle gedimmt werden können.

11. Verfahren nach Anspruch 10, **dadurch gekennzeichnet, dass** die Energieversorgung eingeschaltet wird, bevor die elektrischen Verbraucher über die Kommunikationsschnittstelle eingeschaltet werden.

## Claims

1. Device (31) for controlling at least one electric consumer (1.1 .. 1.n), having at least one key switch (T₁-Tₙ), of a communication interface for communication with the consumers, a control logic (21) and at least one first controlled switch (23), wherein
- the at least one first controlled switch (23) and the communication interface are driven by the control logic (21),
- the control logic has an input for an input signal (511),
- the at least one key switch (T₁-Tₙ) generates the input signal (511) for the control logic (21), and
- the consumers (1.1 .. 1.n) are switched on and off by the input signal (511) generated by the at least one key switch via the communication interface, **characterized in that**
- the at least one first controlled switch (23) is connected between the consumers (1.1 .. 1.n) and an energy supply, and
- the consumers are supplied with voltage by the generated input signal of the at least one key switch (T₁-Tₙ) via the control logic (21) by the at least one controlled switch (23), wherein
- the at least one first controlled switch (23), when the consumers are switched off, separates the energy supply from the consumers (1.1 .. 1.n) as soon as all consumers (1.1 .. 1.n) are switched off by the communication interface, and
- the at least one first controlled switch (23), when the consumers are switched on, applies the energy supply to the consumers (1.1 .. 1.n) and the control logic (21) shortly thereafter outputs the input signal (511) as control signal at the communication interface.

2. Device according to Claim 1, **characterized in that** the electric consumers (1.1 .. 1.n) are electronic operating devices for light sources.

3. Device according to Claim 1 or 2, **characterized in that** the communication interface has a touch-dim functionality.

4. Device according to Claim 3, **characterized in that** the communication interface corresponds to the DALI standard having a touch-dim functionality.

5. Device according to one of the preceding claims, **characterized in that** the control logic (21) has an analogue circuit.

6. Device according to one of the preceding Claims 1 to 4, **characterized in that** the control logic (21) has a digital circuit with a microcontroller (41).

7. Device according to one of the preceding claims, **characterized in that** the device has a second controlled switch (25) which is driven by the control logic (21).

8. Device according to Claim 7, **characterized in that** the second controlled switch (25) reproduces the signal generated by the key switch (T₁-Tₙ) in a partially delayed manner.

9. Method for controlling at least one electric consumer (1.1 .. 1.n) having at least one key switch (T₁-Tₙ) for generating an input signal (511), at least one first controlled switch (23), a communication interface for communication with the consumers (1.1 .. 1.n) and a control logic (21) which drives the at least one first controlled switch (23) and the communication interface, wherein
- the control logic has an input for the input signal (511) generated by the at least one key switch (T₁-Tₙ), and
- the consumers (1.1 .. 1.n) can be switched on and off by the generated input signal (511) of the at least one key switch (T₁-Tₙ) via the communication interface, **characterized in that**
- the at least one first controlled switch (23) is connected between the consumers (1.1 .. 1.n) and an energy supply,
- the consumers can be supplied with voltage by the at least one first controlled switch (23) by the generated input signal of the at least one key switch (T₁-Tₙ) via the control logic,
- the energy supply is separated from the consumers (1.1 .. 1.n) by the at least one first controlled switch (23) as soon as all consumers (1.1 .. 1.n) are switched off via the communication interface,
- the energy supply is applied to the consumers (1.1 .. 1.n) by the at least one first controlled switch (23) on switch-on and the input signal is output shortly thereafter as control signal at the communication interface by the control logic (21).

10. Method according to Claim 9, **characterized in that** the electric consumers can be dimmed by the at least one key switch (T₁-Tₙ) via the communication interface.

11. Method according to Claim 10, **characterized in that** the energy supply is switched on before the electric consumers are switched on via the communication interface.

## Revendications

1. Dispositif (31) pour la commande d'au moins un consommateur électrique (1.1 ... 1.n) comportant au moins un bouton poussoir (T₁-Tₙ), une interface de communication pour la communication avec les consommateurs, une logique de contrôle (21) et au moins un premier commutateur asservi (23),
- l'au moins un premier commutateur asservi (23) et l'interface de communication étant commandés par la logique de contrôle (21) ;
- la logique de contrôle présentant une entrée pour un signal d'entrée (511) ;
- l'au moins un bouton poussoir (T₁-Tₙ) générant le signal d'entrée (511) pour la logique de contrôle (21) ; et
- les consommateurs (1.1 ... 1.n) étant enclenchés et coupés via l'interface de communication par le signal d'entrée (511) généré par l'au moins un bouton poussoir,
**caractérisé en ce que** :
- l'au moins un premier commutateur asservi (23) est monté entre les consommateurs (1.1 ... 1.n) et une alimentation en énergie ; et
- les consommateurs sont alimentés en tension par le signal d'entrée généré de l'au moins un bouton poussoir (T₁-Tₙ) via la logique de contrôle (21) par l'au moins un commutateur asservi (23) ;
- l'au moins un premier commutateur asservi (23), à la coupure des consommateurs, coupe l'alimentation en énergie des consommateurs (1.1 ... 1.n) dès que tous les consommateurs (1.1 ... 1.n) sont coupés via l'interface de communication ; et
- l'au moins un premier commutateur asservi (23), à l'enclenchement des consommateurs, applique l'alimentation en énergie aux consommateurs (1.1 ... 1.n) et la logique de contrôle (21) produit en sortie, peu après, au niveau de l'interface de communication, le signal d'entrée (511) en tant que signal de commande.

2. Dispositif selon la revendication 1, **caractérisé en ce que** les consommateurs électriques (1.1 ... 1.n) sont des appareils électroniques pour des sources de lumière.

3. Dispositif selon la revendication 1 ou 2, **caractérisé en ce que** l'interface de communication comporte une fonctionnalité Touch Dim.

4. Dispositif selon la revendication 3, **caractérisé en ce que** l'interface de communication est conforme à la norme DALI avec une fonctionnalité Touch Dim.

5. Dispositif selon l'une des revendications précédentes, **caractérisé en ce que** la logique de contrôle (21) comporte un circuit analogique.

6. Dispositif selon l'une des revendications précédentes 1 à 4, **caractérisé en ce que** la logique de contrôle (21) comporte un circuit numérique avec un microcontrôleur (41).

7. Dispositif selon l'une des revendications précédentes, **caractérisé en ce que** le dispositif comporte un deuxième commutateur asservi (25) qui est commandé par la logique de contrôle (21).

8. Dispositif selon la revendication 7, **caractérisé en ce que** le deuxième commutateur asservi (25) reproduit de manière partiellement retardée le signal généré par le bouton poussoir (T₁-Tₙ).

9. Procédé de commande d'au moins un consommateur électrique (1.1 ... 1.n) comportant au moins un bouton poussoir (T₁-Tₙ) pour générer un signal d'entrée (511), au moins un premier commutateur asservi (23), une interface de communication pour la communication avec les consommateurs (1.1 ... 1.n) et une logique de contrôle (21) qui commande l'au moins un premier commutateur asservi (23) et l'interface de communication,
- la logique de contrôle présentant une entrée pour le signal d'entrée (511) généré par l'au moins un bouton poussoir T₁-Tₙ ; et
- les consommateurs (1.1 ... 1.n) pouvant être enclenchés et coupés via l'interface de communication par le signal d'entrée généré (511) de l'au moins un bouton poussoir (T₁-Tₙ) ,
**caractérisé en ce que** :
- l'au moins un premier commutateur asservi (23) est monté entre les consommateurs (1.1 ... 1.n) et une alimentation en énergie ; et
- les consommateurs peuvent être alimentés en tension par le signal d'entrée généré de l'au moins un bouton poussoir (T₁-Tₙ) via la logique de contrôle par l'au moins un premier commutateur asservi (23) ;
- l'alimentation en énergie est coupée des consommateurs (1.1 ... 1.n) par l'au moins un premier commutateur asservi (23) dès que tous les consommateurs (1.1 ... 1.n) sont coupés via l'interface de communication ;
- l'alimentation en énergie est appliquée aux consommateurs (1.1 ... 1.n) par l'au moins un premier commutateur asservi (23) lors de l'enclenchement et le signal d'entrée est, peu après, produit en sortie, en tant que signal de commande, par la logique de contrôle (21) au niveau de l'interface de communication.

10. Procédé selon la revendication 9, **caractérisé en ce que** les consommateurs électriques peuvent subir une atténuation par l'au moins un bouton poussoir (T₁-Tₙ) via l'interface de communication.

11. Procédé selon la revendication 10, **caractérisé en ce que** l'alimentation en énergie est enclenchée avant l'enclenchement des consommateurs électriques via l'interface de communication.
